Europäisches Patentamt

European Patent Office

Office européen des brevets

(11) Veröffentlichungsnummer: **0 289 864 B1**

(12) **EUROPÄISCHE PATENTSCHRIFT**

(45) Veröffentlichungstag der Patentschrift: **30.09.92**

(21) Anmeldenummer: **88106297.0**

(22) Anmeldetag: **20.04.88**

Teilanmeldung 91101481.9 eingereicht am 20/04/88.

(51) Int. Cl.⁵: **A01D 80/00**

(54) **Heuwerbungsmaschine.**

(30) Priorität: **22.04.87 DE 3713474**
**22.01.88 DE 3801804**
**22.01.88 DE 3801803**
**18.12.87 DE 8716698 U**

(43) Veröffentlichungstag der Anmeldung:
**09.11.88 Patentblatt 88/45**

(45) Bekanntmachung des Hinweises auf die
Patenterteilung:
**30.09.92 Patentblatt 92/40**

(84) Benannte Vertragsstaaten:
**AT BE CH DE FR GB LI NL**

(56) Entgegenhaltungen:
**DE-A- 1 902 287**
**DE-A- 3 031 837**
**DE-U- 8 625 784**

(73) Patentinhaber: **H. Niemeyer Söhne GmbH &
Co. KG
Heinrich-Niemeyer-Strasse 52
W-4446 Hörstel-Riesenbeck(DE)**

(72) Erfinder: **Ungruh, Josef
Birkhahnweg 7
W-4440 Rheine(DE)**
Erfinder: **Kosel, Hans Dieter
Barbarastrasse 30
W-4530 Ibbenbüren(DE)**

(74) Vertreter: **Busse & Busse Patentanwälte
Postfach 1226 Grosshandelsring 6
W-4500 Osnabrück(DE)**

EP 0 289 864 B1

## Beschreibung

Die Erfindung bezieht sich auf eine Heuwerbungsmaschine in einer Ausbildung gemäß dem Oberbegriff des Anspruchs 1.

Bei einer bekannten Maschine mit einem Querträger, der beidseits des Mittelträgers je einen Seitenträger mit zugeordnetem Kreiselrechen umfaßt (EP-A 02 03 023), bestehen die Seitenträger aus einem Innen- und Außenteil, wobei der Außenteil um die den beiden Teilen gemeinsame Längsmittelachse des Seitenträgers relativ zum Innenteil um 180° zu verschwenken ist. Dies ermöglicht, die äußeren Kreiselrechen in eine Transportschutzstellung zu überführen, in der sich bei hochgeklappten Seitenträgern die Rechzinken mit ihren Enden zur Gerätemitte hin erstrecken.

Das Verschwenken der Kreiselrechen um die Längsmittelachse der Seitenträger oder eine dazu leicht geneigte Achse in die Transportschutzstellung kann unabhängig vom Hochschwenken der Seitenträger, d. h. vor oder nach dem Hochschwenken, von Hand vorgenommen werden. In diesem Fall muß eine Bedienperson vom Fahrersitz absteigen, die jeweiligen Verriegelungen lösen, die Verschwenkung der Außenteile der Seitenträger vornehmen, die Verriegelung wieder herstellen und schließlich den Schlepper wieder besteigen, bevor eine Transportfahrt angetreten werden kann. Dies ist zeitraubend, umständlich, mit einigem Kraftaufwand sowie auch mit einer gewissen Gefährdung der Bedienperson durch die Zinkenspitzen verbunden, da sich die Bedienperson im Bewegungsbereich der Rechzinken beim Schwenken der Kreiselrechen in die Transportschutzstellung befindet.

Statt dessen kann das Verschwenken der Rechzinken in die Transportschutzstellung auch während des Hochschwenkens der Seitenträger durch ein Getriebe erfolgen, das eine von der Hochschwenkbewegung der Seitenträger abgeleitete Schwenkbewegung auf den den Kreiselrechen tragenden Außenteil des Seitenträgers überträgt. Ein solches, eine Zahnstange und Zahnsegmente sowie Kurbeln und Übertragungshebel umfassendes Getriebe ist baulich außerordentlich aufwendig und zudem sehr empfindlich, so daß es für ein zuverlässiges Funktionieren der regelmäßigen Wartung bedarf. Insbesondere aber liegen die nach innen gerichteten Rechzinken mit ihren Verletzungsgefahren hervorrufenden Enden in Körperhöhe von Personen, so daß Gefahren von Verletzungen gegenüber einer nach außen gerichteten Lage der Rechzinken zwar gemindert, nicht jedoch beseitigt sind.

Bei einer anderen bekannten Maschine mit einem Querträger, der einen Mittelträger sowie beidseits des Mittelträgers je einen mittleren und äußeren Seitenträger umfaßt (DE-GM 86 25 784.6), ist der mittlere Seitenträger aus der Arbeitsstellung hochzuklappen in eine annähernd aufrechte Transportstellung. Der an den mittleren Seitenträgern nahe der Hochachse seines Kreiselrechens gelenkig angreifende äußere Seitenträger ist mitsamt dem äußeren Kreiselrechen in einer zur Gerätemitte hin um die Zusatzachse verschwenkte Transportschutzstellung zu überführen, in der die Längsmittelachsen der äußeren Seitenträger schräg nach oben verlaufend ausgerichtet sind und die Seitenträger zueinander gewissermaßen eine Dreieckseitenschenkeln entsprechende Lage einnehmen. Die dadurch bedingte Transporthöhe der Maschine ist erheblich, beeinflußt die Schwerpunktlage des Gerätes zum Schlepper hin ungünstig, hat damit eine verminderte Kippstabilität und macht ein Durchfahren von Toren und dgl. während der Transportfahrt in vielen Fällen unmöglich. Um eine Dreieckseitenschenkeln entsprechende Lage einnehmen zu können, d. h., daß die Endbereiche der beiden äußeren Seitenträger einander in der Transportstellung annähernd berühren, sind die Kreiselrechen der äußeren Seitenträger in der Regel manuell im Verlaufe der Überführung der Seitenträger in diese Transportstellung derart zu verdrehen, daß sich Rechzinken der beiden Kreiselrechen einander kreuzen können, was zu zeitlichen Verzögerungen führen und Justierarbeiten im Bereich von Rechzinken mit nicht unerheblichem Verletzungsrisiko erforderlich machen kann.

Der Erfindung liegt die Aufgabe zugrunde, mit baulich einfachen Mitteln eine Heuwerbungsmaschine der eingangs genannten Art zu schaffen, bei der auch in einer Ausbildung mit je zwei Seitenträgern beidseits des Mittelträgers jeweils äußeren Seitenträger in eine Transportstellung mit gegenüber bekannten Geräten einer verringerten Transporthöhe sowie einer verbesserten Schwerpunktlage zum Schlepper hin zu überführen sind und gleichfalls eine Lage einnehmen, in der sie keine Verletzungsgefahren für Personen mehr hervorrufen.

Die Erfindung löst diese Aufgabe ausgehend von einer Heuwerbungsmaschine gemäß dem Oberbegriff des Anspruchs 1 mit den Merkmalen des kennzeichnenden Teils dieses Anspruchs. Hinsichtlich wesentlicher weiterer Ausgestaltungen der Erfindung wird auf die Ansprüche 2 bis 21 verwiesen.

Bei der Heuwerbungsmaschine gemäß der Erfindung erstrecken sich in einer Ausbildung mit vier Kreiselrechen in der Transportstellung, d. h. bei hochgeschwenkten Seitenträgern und bei in Transportschutzstellung verschwenkten Kreiselrechen, diese Rechzinken im wesentlichen vertikal nach oben hin und liegen mit ihren freien Enden in einer Höhe, in der sie keine Verletzungsgefahr gegenüber Personen mehr hervorrufen. Die Heuwerbungsmaschine ist dabei baulich sehr einfach und hat in Transportstellung aller Teile ebenfalls eine transportgerechte, stark verminderte Gesamtbreite. Sie kann dabei leicht vollautomatisch aus ihrer Betriebsstellung in ihre Transportstellung überführt werden, wenn erfindungsgemäß eine Stellstange vorgesehen ist, die am Außenende des Mittelträgers und an einem Lager und Getriebegehäuse für das Rechrad über Gelenke mit fahrtrichtungsparallelen Gelenkachsen derart angreift, daß sie beim Hochschwenken des Seitenträgers als Zugstange die Kreiselrechen-Gehäuseeinheit in Transportschutzstellung überführt und in beiden Endstellungen des Seitenträgers diese Einheit und damit den Kreiselrechen in der jeweiligen Stellung zum Seitenträger arretiert.

In vorteilhafter Weise ist die Heuwerbungsmaschine nach der Erfindung auch mit baulich einfachen Mitteln als z. B. Sechskreiselrechenmaschine auszubilden, bei der sich die jeweils äußeren Kreiselrechen um zumindest etwa 90° Grad einwärts, d. h. zur Gerätemitte hin, verschwenken bzw. klappen lassen, so daß die Rechzinken eine im wesentlichen vertikal nach oben hin gerichtete Ausrichtung in der Transportstellung haben bzw. bei einer Schwenkbewegung von mehr als 90° in einen zumindest bereichsweise durch Seitenträgerteile seitlich begrenzten Transportraum zu bringen sind, der sich oberhalb des Mittelträgers erstreckt. Auch in einer Ausbildung der Maschine mit je zwei Seitenträgern beidseits des Mittelträgers und somit insgesamt Sechskreiselrechen läßt sich damit eine Transporthöhe der Maschine in der Transportstellung verwirklichen, die gegenüber bekannten Maschinen dieser Art deutlich geringer ist. Damit geht auch eine weit verbesserte Schwerpunktlage der Maschine einher.

Eine äußerst kompakte und hinsichtlich der Gesamtschwerpunktlage günstige Maschinenausführung ergibt sich z. B. bei dieser Maschinenausbildung, bei der die äußeren Seitenträger mit fest an diesen angeordneten äußeren Kreiselrechen um die Zusatzachsen einwärts so einzuklappen bzw. einzuschwenken sind, daß die äußeren Enden von Rechzinken in der Transportschutzstellung in etwa am Mittelträger anliegen. Hierbei entspricht die Transporthöhe einer Maschinenausführung mit insgesamt sechs Kreiselrechen im wesentlichen der Transporthöhe einer Maschine mit vier Kreiselrechen und jeweils nur einem in die Vertikale verschwenkbaren Seitenträger.

Weitere Einzelheiten und Vorteile ergeben sich aus der nachfolgenden Beschreibung und der Zeichnung, in der ein Ausführungsbeispiel des Gegenstands der Erfindung schematisch näher veranschaulicht ist. In der Zeichnung zeigen:

Fig. 1     eine schematische Rückansicht eines Ausführungsbeispiels einer Heuwerbungsmaschine nach der Erfindung mit vier Kreiselrechen in Betriebsstellung der Teile;

Fig. 2     eine Ansicht ähnlich Fig. 1 der dort veranschaulichten Maschine mit in Transportstellung überführten Teilen;

Fig. 3     eine abgebrochene Einzeldarstellung des Außenendes des Mittelträgers und eines damit verbundenen Seitenträgers der Maschine nach Fig. 1 bei Blickrichtung auf die Teile gemäß Fig. 1;

Fig. 4     eine abgebrochene und vereinfachte Draufsicht zu Fig. 3;

Fig. 5     in einer Seitenansicht ein alternatives Ausführungsbeispiel einer Heuwerbungsmaschine nach der Erfindung mit vier Kreiselrechen mit in Betriebsstellung befindlichem Mittelträger und in die Transportstellung verschwenkten Seitenträgern;

Fig. 6     eine schematische Rückansicht eines weiteren alternativen Ausführungsbeispiels einer Heuwerbungsmaschine nach der Erfindung mit vier Kreiselrechen in Betriebsstellung ihrer Teile;

Fig. 7     eine zu Fig. 6 analoge Darstellung dieser Maschine mit in Transportstellung überführten Teilen;

Fig. 8     eine teilweise geschnittene Einzeldarstellung des Außenendes des Mittelträgers eines damit verbundenen Seitenträgers des Ausführungsbeispiels nach Fig. 6 bei Blickrichtung auf die Teile gemäß Fig. 6;

Fig. 9     eine abgebrochene und vereinfachte Draufsicht zu Fig. 7;

Fig. 10    eine schematische ausschnittsweise Rückansicht eines weiteren Ausführungsbeispiels der Heuwerbungsmaschine nach der Erfindung in Sechskreiselrechenausbildung in Betriebsstellung der Teile;

Fig. 11    ausschnittsweise eine Draufsicht auf das Ausführungsbeispiel nach Fig. 10;

Fig. 12    eine Darstellung des Ausführungsbeispiels nach Fig. 10 mit in Transportstellung überführten Teilen;

Fig.13     eine zu Fig. 10 analoge Darstellung eines weiteren alternativen Ausführungsbeispiels der Maschine mit sechs Kreiselrechen in Betriebsstellung der Teile;

Fig. 14    eine zu Fig. 11 analoge Darstellung des Ausführungsbeispiels nach Fig. 13, und

Fig. 15    eine Ansicht ähnlich Fig. 12 mit in Transportstellung überführten Teilen.

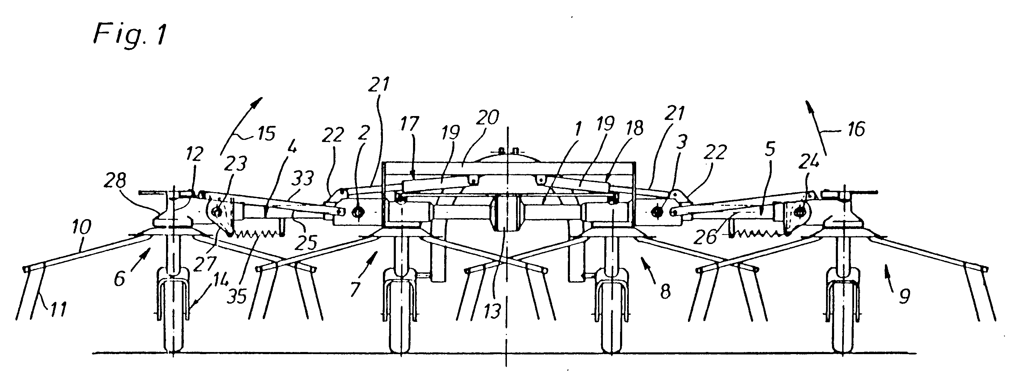

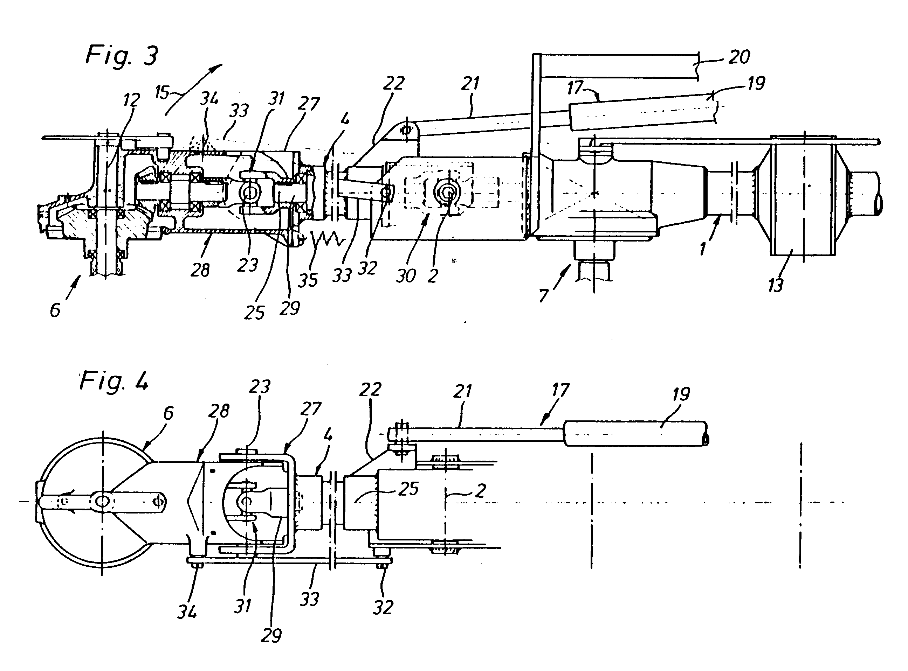

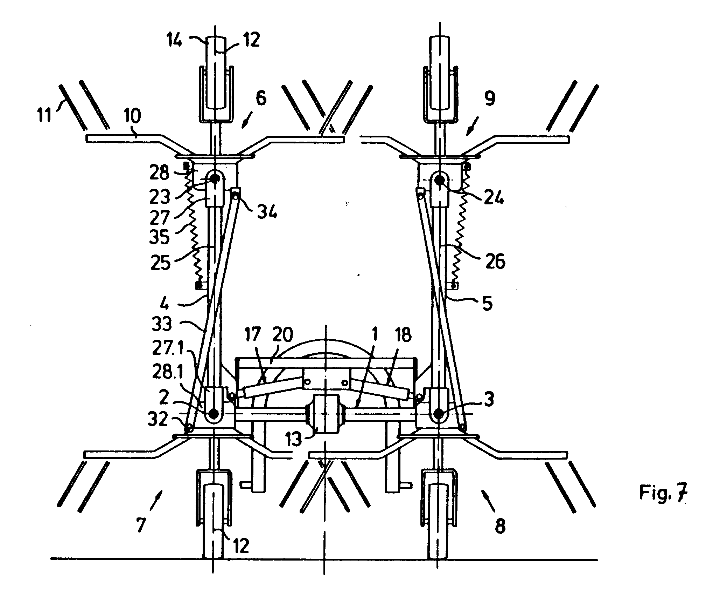

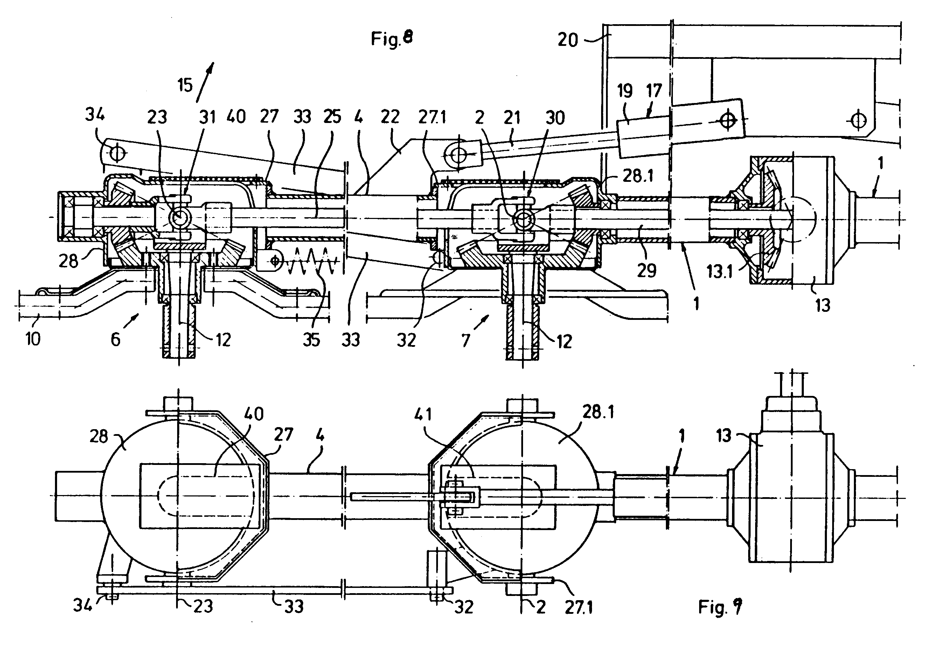

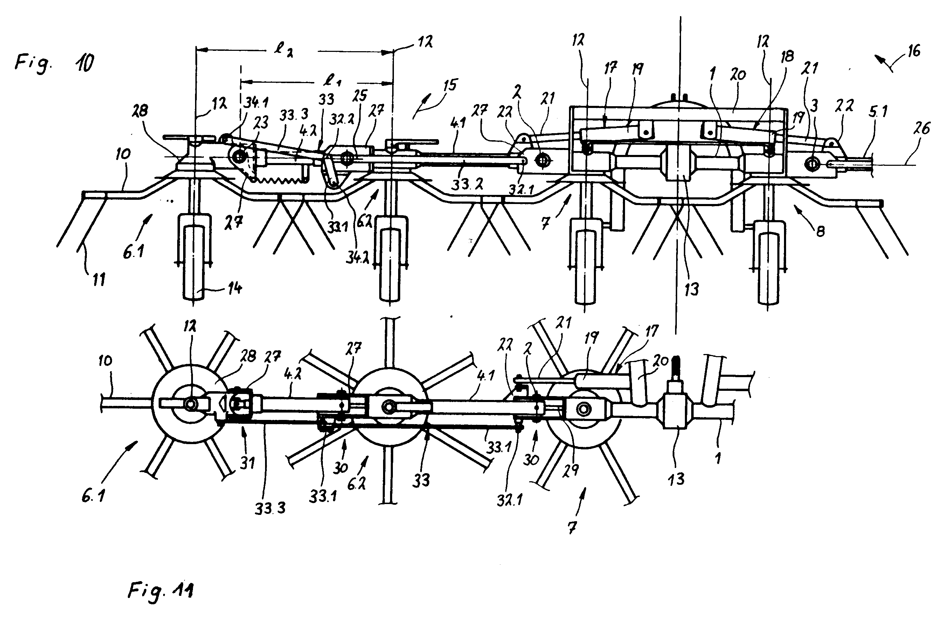

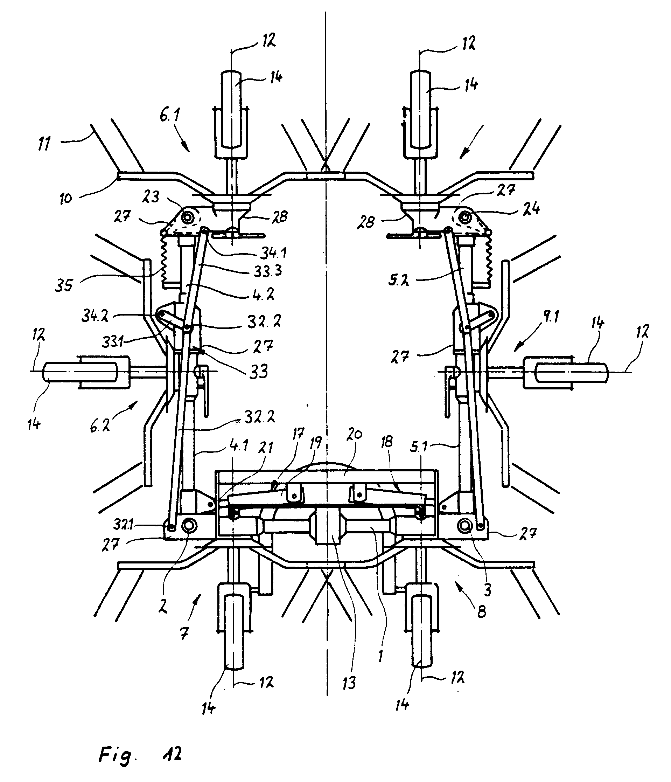

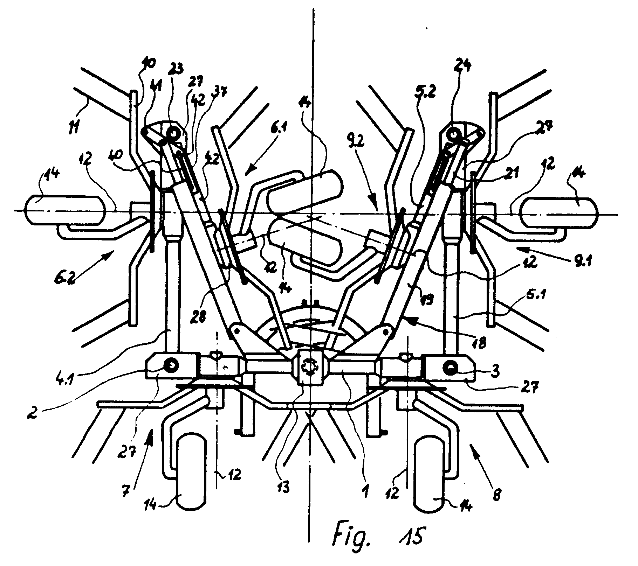

Bei den in der Zeichnung veranschaulichten Ausführungsbeispielen sind gleichwirkende Bauteile mit gleichen Bezugsziffern versehen. Im einzelnen besteht die veranschaulichte Heuwerbungsmaschine aus einem rohrförmigen, an einen nicht dargestellten landwirtschaftlichen Schlepper anbaubaren Querträger, der einen Mittelträger 1 und 2 sowie mit diesem jeweils um eine fahrtrichtungsparallele Achse 2, 3 gelenkig verbundene Seitenträger 4, 5 umfaßt. Die Heuwerbungsmaschine ist in den Ausführungsbeispielen nach den Fig. 1 bis 9 mit einer Anzahl von Kreiselrechen 6, 7, 8, 9 sowie bei den Ausführungsbeispielen nach den Fig. 10 bis 15 mit einer Anzahl von Kreiselrechen 6.1, 6.2, 7, 8, 9.1, 9.2 versehen, die an den Außenenden von sternförmig angeordneten Armen 10 Rechzinken 11 aufweisen, welche in Betriebsstellung der Teile zum Boden hin gerichtet sind. Sämtliche Kreiselrechen sind am Querträger um Hochachsen 12 drehbar gelagert, wobei zwei Kreiselrechen 7, 8 dem Mittelträger 1 und je ein Kreiselrechen 6, 9 bzw. 6.1, 6.2 bzw. 9.1, 9.2 einem Seitenträger 4 bzw. 5 oder den beiden Seitenträgern 4.1, 4.2 bzw. 5.1, 5.2 zugeordnet sind. Die Kreiselrechen sind dabei mittels einer im Querträger gelagerten Antriebswelle antreibbar, die ihre Drehbewegung von einem mit der Zapfwelle des Schleppers verbindbaren Zentralgetriebe 13 her erhält. Auf Einzelheiten in der Ausbildung der Antriebswelle, soweit sie von Bedeutung sind, wird weiter unten noch eingegangen. Die Heuwerbungsmaschine umfaßt ferner Laufräder 14, welche die Maschine während des Betriebs auf dem Boden abstützen und jeweils unter einem Kreiselrechen angeordnet sind.

Die Seitenträger 4, 5 der dargestellten Maschinen mit vier Kreiselrechen sind mitsamt den ihnen am äußeren Ende zugeordneten Kreiselrechen 6 bzw. 9 um die fahrtrichtungsparallelen Schwenkachsen 2 bzw. 3 in Richtung der eingezeichneten Pfeile 15, 16 aus ihrer im Betrieb im wesentlichen horizontalen Stellung in die veranschaulichten Transportstellungen hochschwenkbar, in der sie sich im wesentlichen vertikal erstrecken. Zum Hochschwenken der Seitenträger 4, 5 sind Druckmittelantriebe 17, 18 vorgesehen, deren Zylinder 19 gelenkig in einer parallel oberhalb des Mittelträgers 1 an diesem ortsfest abgestützten Rahmenstrebe 20 angreifen und deren Kolbenstangen 21 gelenkig mit einem Konsolteil 22 an den Seitenträgern 4 bzw. 5 verbunden sind.

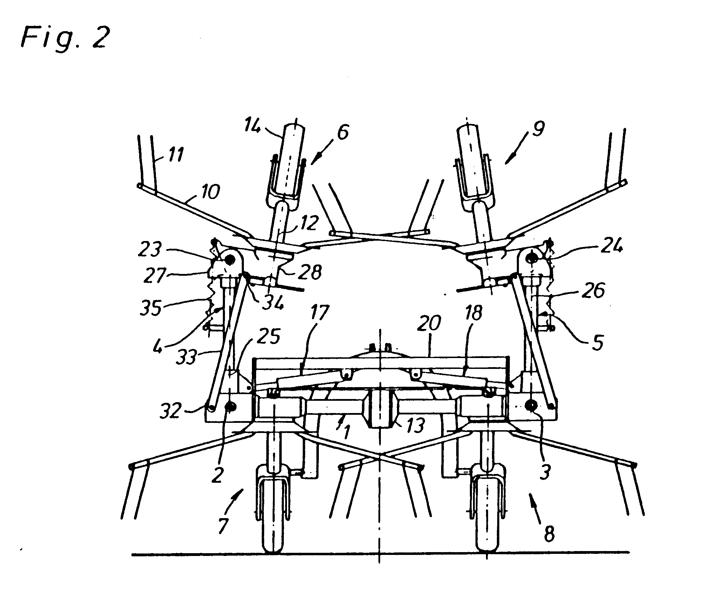

Werden durch Beaufschlagen der Druckmittelzylinder 17, 18 deren Kolbenstangen 21 in die Zylinder 19 eingefahren, so erfolgt das Hochschwenken der Seitenträger 4, 5 in die Transportstellung (Fig.2), in der die Seitenträger 4, 5 über die Druckmittelantrieb 17, 18 für Transportfahrten verriegelbar sind. Für eine Rückführung der Teile in die Betriebsstellung können die Druckmittelantriebe 17, 18 entgegengesetzt beaufschlagt werden oder auch nur drucklos schaltbar sein, in welchem Falle die Rückkehr unter Schwerkraftwirkung, gegebenenfalls mit Federunterstützung, erfolgt. Die Kreiselrechen 6, 9 an den Enden der Seitenträger 4, 5 sind ihrerseits um eine fahrtrichtungsparallel ausgerichtete Zusatzachse 23, 24 um etwa 90° einwärts in eine Transportschutzstellung klappbar, in der sich die Hochachsen 12 der Kreiselrechen 6, 9 annähernd parallel zur Längsmittelachse 25, 26 ihres Seitenträgers 4 bzw. 5 erstrecken (Fig. 2).

In dem in Fig. 2 veranschaulichten Beispiel ist der Schwenkwinkel geringfügig größer als 90°, so daß die Hochachsen der in Transportschutzstellung befindlichen Kreiselrechen 6, 9 eine nach oben hin konvergierende Ausrichtung haben. In dieser Transportschutzstellung der Kreiselrechen 6, 9 erstrecken sich deren Rechzinken 11 nach oben hin und enden in einer Höhe, die außerhalb des Gefährdungsbereiches für Personen gelegen ist und beispielsweise zwei Meter und darüber beträgt. Die Gesamtbreite der Maschine ist zugleich auf die Abmessung einer zweikreiseligen Maschine reduziert.

In dem in den Fig. 1 bis 4 veranschaulichten Ausführungsbeispiel schneiden die Zusatzachsen 23, 24 die Längsmittelachsen 25, 26 der Seitenträger 4, 5 im Abstand zu den Hochachsen 12 der Kreiselrechen 6, 9 unter rechtem Winkel. Zur baulichen Verwirklichung dieser Achsanordnung weisen die Seitenträger 4, 5 an ihrem Außenende eine Gabel 27 auf, deren Schenkel ein Lager- und Getriebegehäuse 28 für den Kreiselrechen 6 bzw. 9 um die Zusatzachse 23, 24 klappbar abstützen. Dieses Lager- und Getriebegehäuse 28 bildet gewissermaßen das äußerste Ende des zugeordneten Seitenträgers 4, 5 bzw. eine axiale Verlängerung desselben und umschließt - ebenso wie die Seitenträger 4, 5 - den zugehörigen Teil der Antriebswelle 29, die sowohl im Bereich der Achsen 2, 3, als auch im Bereich der Zusatzachsen 23, 24 je mit einem Kreuzgelenk 30 bzw. 31 versehen ist. Die Gelenkachsen dieser Kreuzgelenke 30, 31 liegen mit der Aches 2, 3 bzw. der Zusatzachse 23, 24 jeweils in einer gemeinsamen Ebene.

Am Außenende des Mittelträgers 1 greift in einem Gelenk 32 mit fahrtrichtungsparalleler Achse eine Stellstange 33 an, deren anderes Ende über ein Gelenk 34 mit ebenfalls fahrtrichtungsparalleler Achse mit dem Lager- und Getriebegehäuse 28 verbunden ist. Die Lage der Gelenke 32, 34 ist dabei so gewählt, daß beim Hochschwenken der Seitenträger 4, 5 die Stellstange 33 jeweils als Zugstange wirkt und die Klappeinheit aus Kreiselrechen 6, 9 und Gehäuse 28 in die Transportschutzstellung überführt. Beim Herabschwenken der Seitenträger 4, 5 führt die Stellstange 33 als Druckstange wirkend die Klappeinheit wieder in ihre Betriebsstellung gemäß Fig. 1 zurück. In beiden Stellungen wirkt die Stellstange 33 zusätzlich als Verriegelungselement, durch die die Klappeinheiten in ihre jeweilige Lage zum Seitenträger 4, 5 arretiert sind. Auf diese Weise ersetzt die Stellstange 33 gesonderte Verriegelungsmittel, die grundsätzlich zusätzlich zur Stellstange vorhanden sein können.

Zwischen jedem Seitenträger 4, 5 und seiner Klappeinheit ist eine Zugfeder 35 vorgesehen, welche die Klappeinheit in die Betriebsstellung zurückzuklappen bestrebt ist. Diese Zugfeder 35 unterstützt die Rückklappbewegung der Klappeinheit beim Rückschwenken der Seitenträger 4, 5 in ihre Betriebsstellung. Anstelle einer Stellstange 33, die ein besonders einfaches Bauteil bildet, kann zwischen der Klappeinheit und den Seitenträgern 4, 5 auch irgendeine andere geeignete Antriebs- oder Antriebsübertragungsvorrichtung vorgesehen sein, z. B. in Gestalt eines unabhängigen Druckmittelantriebes, dessen Beaufschlagung auf die Beaufschlagung der Druckmittelantriebe 17, 18 abgestimmt sein kann. Bei dem vorstehend beschriebenen Ausführungsbeispiel nach den Fig. 1 bis 4 sind die Achsen 2, 3, 23, 24 sowie die der Gelenke 32, 34 exakt fahrtrichtungsparallel ausgerichtet, jedoch können hier gewisse Abweichungen vorgenommen werden, die zweckmäßigerweise jedoch nicht 10% überschreiten sollten.

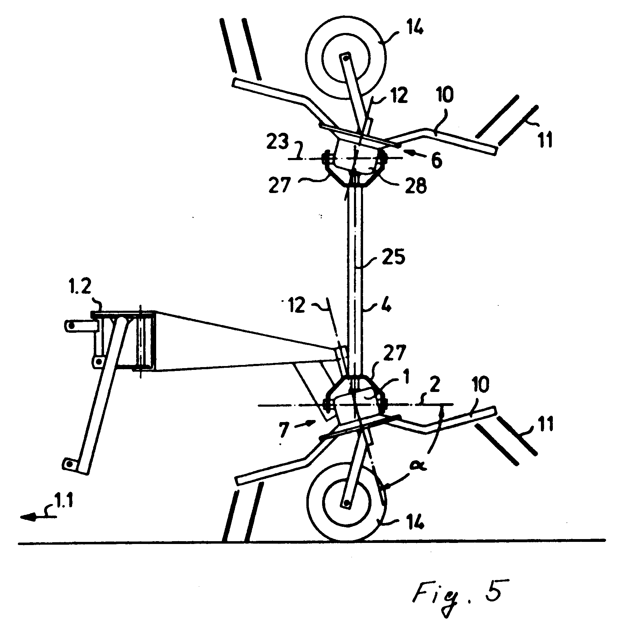

Bei dem Ausführungsbeispiel nach Fig. 5 ist bei ansonsten im wesentlichen analoger Ausbildung wie bei dem Ausführungsbeispiel nach den Fig. 1 bis 4 der Querträger in Fahrtrichtung (Pfeil 1.1) nach vorn geneigt angeordnet, so daß die während des Arbeitsbetriebes jeweils vorderen Rechzinken 11 eine zum Boden hin geringere Höhe haben als die hinteren Rechzinken 11. Der dadurch bedingte Streuwinkel kann einstellbar sein. Die Gelenkachsen 2 bzw. 3 sind bei diesem Ausführungsbeispiel fahrtrichtungsparallel und horizontal ausgerichtet, so daß sie die quer zur Fahrtrichtung 1.1 verlaufenden, durch die Hochachsen 12 der Kreiselrechen 7 bzw. 8 bestimmten Hochachsenebenen unter einem Winkel schneiden, der kleiner als 90° ist. Die äußeren Seitenträger 4 bzw. 5 sind aus ihrer im Betrieb horizontalen Stellung, in der sie in gleicher Weise wie der Mittelträger 1 zum Boden bzw. Horizontalen in Fahrtrichtung geneigt sind, durch eine Schwenkbewegung um ihre Schwenkachsen 2 bzw. 3 in die in der Fig. 5 veranschaulichte Transportstellung zu verschwenken, wobei der Winkel derart gewählt ist, daß sich die äußeren Seitenträger 4 bzw. 5 und die äußeren Kreiselrechen 6 bzw. 7 in etwa oberhalb des Mittelträgers 1 bzw. der Kreiselrechen 7, 8 erstrecken. Zwischen dem in etwa am vorderen Ende des Dreipunktbockes 1.2 endenden Schlepper und den hoch verschwenkten Kreiselrechen 6 bzw. 9 ist dadurch ein hinreichender Abstand auch bei noch angehobenem Mittelträger 1 vorhanden, so daß in der Transportstellung der Maschinenteile Verletzungen einer Bedienperson nicht zu befürchten sind. Die äußeren Seitenträger sind auch mit relativ langen Abmessungen in einer einen hinreichenden Abstand zum Schlepper wahrende Transportstellung zu bringen. Über Gabelteile 27 sind der äußere Seitenträger 4 bzw. 5 mit dem Mittelträger 1 bzw. mit dem äußeren Kreiselrechen 6 bzw. 7 gelenkig verbunden. Der äußere Seitenträger 4 bzw. 5 ist dabei derart in den Gabelteilen 27 befestigt, daß er in der horizontalen Betriebsstellung zum Boden hin geneigt ist. An dem Seitenträger 4 bzw. 5 kann sich auch noch ein weiterer äußerer Seitenträger angelenkt befinden, der seinerseits um die Zusatzachse 23 um zumindest etwa 90° einwärts verschwenkbar ist, aber auch um mehr als 90° soweit verschwenkt werden kann, daß sich die dann jeweils äußeren Kreiselrechen in etwa oberhalb des Mittelträgers erstrecken. Die Zusatzachsen 23 bzw. 24 können ihrerseits derart ausgerichtet sein, daß die Kreiselrechen gegenüber den äußeren Seitenträgern 4, 5 nach ihrem Verschwenken um die Achse 23 bzw. 24 in eine rückversetzte Lage gebracht sind.

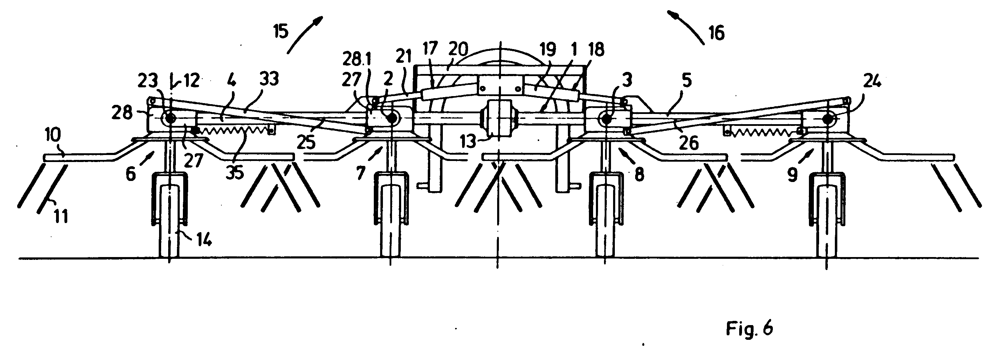

In dem in den Fig. 6 bis 9 veranschaulichten Ausführungsbeispiel einer ebenfalls vierkreiseligen Maschine sind bei im wesentlichen ebenfalls analoger Ausbildung wie die anderen vierkreiseligen Ausführungsbeispiele die Zusatzachsen 23, 24 derart gelegen, daß sie die Hochachsen 12 der Kreiselrechen 6, 9 in deren Schnittpunkt mit der Längsmittelachse 25 bzw. 26 der Seitenträger 4, 5 schneiden. Die Schwenkachsen 2, 3 schneiden die jeweilige Hochachse 12 des zugeordneten Kreiselrechens 7, 8 des Mittelträgers 1 ebenfalls in deren Schnittpunkt mit der Längsmittelachse des Mittelträgers, so daß in der Transportstellung bei dem veranschaulichten Ausführungsbeispiel die Hochachsen 12 koaxial zur jeweiligen Längsmittelachse 25, 26 eines Seitenträgers 4 bzw. 5 verlaufen. Sofern der Mittelträger sowie die Seitenträger 4, 5 in ihrer Betriebsstellung in Fahrtrichtung gesehen zum Boden bzw. zur Horizontalen geneigt angeordnet sind, so daß die in Fahrtrichtung vorderen Rechzinken der Kreiselrechen 6, 7, 8, 9 zum Boden hin einen geringeren Abstand haben als die hinteren (Fig. 5), kann der koaxiale Verlauf der Hochachsen 12 sowie die dadurch bedingte geringere Belastung der Maschinenteile durch eine geeignete Ausrichtung bzw. Lage der Schwenkachsen 2, 3 oder auch der Zusatzachsen 23, 24 mit entsprechend angepaßter Ausbildung der Gelenkanschlußteile verwirklicht werden. Durch die bei diesem Ausführungsbeispiel verwirklichte Lage der in der Transportstellung gelegenen Kreiselrechen oberhalb der hochverschwenkten äußeren Seitenträger

wirken auf die Anschlußgelenkverbindungteile verringerte Belastungen. Momentenbelastungen an den Anschlußgelenkverbindungsteilen entfallen nahezu.

Bei dem in den Fig. 10 bis 12 veranschaulichten Ausführungsbeispiel einer sechskreiseligen Heuwerbungsmaschine sind die mittleren Seitenträger 4.1, 5.1 mitsamt den ihnen zugeordneten Kreiselrechen 6.2 bzw. 9.1 sowie den äußeren Seitenträgern 4.2, 5.2 sowie diesen zugeordneten Kreiselrechen 6.1, 9.2 um die fahrtrichtungsparallelen Schwenkachsen 2 bzw. 3 in Richtung der Pfeile 15, 16 aus ihrer im Betrieb im wesentlichen horizontalen Stellung (Fig. 10) in die in Fig. 12 veranschaulichte Transportstellung hochschwenkbar, in der sich die mittleren Seitenträger 4.1, 5.1 im wesentlichen vertikal erstrecken. Zum Hochschwenken der Seitenträger ist jeweils ein Druckmittelantrieb 17, 18 vorgesehen, dessen Zylinder 19 gelenkig an einer parallel oberhalb des Mittelträgers 1 an diesem ortsfest abgestützten Rahmenstrebe 20 angreift und dessen Kolbenstange 21 gelenkig mit einem Konsolteil 22 verbunden ist, welches seinerseits in dem Ausführungsbeispiel nach den Fig. 10 bis 12 an dem mittleren Seitenträger 4.1 bzw. 5.1 angreift. Werden durch Beaufschlagen der Druckmittelzylinder 17, 18 deren Kolbenstangen 21 in die Zylinder 19 eingefahren, so erfolgt das Hochschwenken der Seitenträger 4.1, 5.1, 4.2, 5.2 in die Transportstellung gemäß Fig. 12, in der die Seitenträger 4.1, 5.1, 4.2, 5.2 über die Druckmittelantriebe 17, 18 für Transportfahrten verriegelbar sind. Für eine Rückführung der Teile in die Betriebsstellung können die Druckmittelantriebe 17, 18 wiederum entgegengesetzt beaufschlagt werden oder auch nur drucklos schaltbar sein, in welchem Falle die Rückkehr unter Schwerkraftwirkung, gegebenenfalls mit Federunterstützung, erfolgt.

Die Kreiselrechen 6.1, 9.2 an den Enden der äußeren Seitenträger 4.2, 5.2 sind ihrerseits um die fahrtrichtungsparallel ausgerichteten Zusatzachsen 23, 24 in dem Ausführungsbeispiel nach den Fig. 10 bis 12 um etwa 90° in eine Transportschutzstellung klappbar, in der sich die Hochachsen 12 der Kreiselrechen 6, 9 annähernd parallel zur Längsmittelachse 25, 26 der Seitenträger erstrecken. Die Zusatzachse 23, 24 schneidet bei dem Ausführungsbeispiel nach den Fig. 10 bis 12 die Längsmittelachsen 25 bzw. 26 der Seitenträger 4.1, 4.2, 5.1, 5.2 in deren Betriebsstellung (Fig. 10) mit einem seitlichen Lageabstand $l_1$ zur Hochachse 12 des Kreiselrechens 6.2 bzw. 9.1 des mittleren Seitenträgers 4.1, 5.1. Das Verhältnis dieses seitlichen Lageabstandes $l_1$ zum Abstand $l_2$ der Hochachsen 12 der Kreiselrechen 6.1, 6.2, 9.1, 9.2 der jeweiligen Seitenträger 4.1, 4.2, 5.1, 5.2 zueinander ist dabei derart gewählt, daß das Verhältnis des Abstandes $l_1$ zum Abstand $l_2$ größer oder gleich 0,3 ist.

In dem Ausführungsbeispiel nach Fig. 10 schneidet die jeweilige Zusatzachse 23, 24 die entsprechende Längsmittelachse 25, 26 der Seitenträger nahe der Hochachse 12 des äußeren Kreiselrechens, so daß die Rechzinken nach ihrer Verschwenkung um 90° sich in einer Transportschutzstellung befinden, in der sich die Rechzinken 11 nach oben hin erstrecken und in einer Höhe enden, die einerseits außerhalb des Gefährdungsbereiches für Personen liegt, andererseits jedoch gegenüber bekannten Maschinen mit sechs Kreiselrechen eine wesentlich verbesserte Schwerpunktlage bewirkt. Die Zusatzachsen 23, 24 können die Hochachsen 12 der äußeren Kreiselrechen 6.1, 9.2 schneiden, so daß das Verhältnis von $l_1$ zu $l_2$ auch eins werden kann. Zur baulichen Verwirklichung der Anordnung der Zusatzachse 23, 24 mit seitlichem Lageabstand weisen die äußeren Seitenträger 4.2, 5.2 an ihrem Außenende eine Gabel 27 auf, deren Schenkel ein Lager- und Getriebegehäuse 28 für den äußeren Kreiselrechen 6.1 bzw. 9.2 um die Zusatzachse 23, 24 klappbar abstützen. Dieses Lager- und Getriebegehäuse 28 bildet gewissermaßen den äußeren Endbereich des zugeordneten äußeren Seitenträgers 4.2, 5.2 bzw. eine axiale Verlängerung desselben in der Betriebsstellung (Fig. 10) und umschließt - ebenso wie die gesamten Seitenträger 4.1, 4.2, 5.1, 5.2 - den zugehörigen Teil der Antriebswelle 29, die sowohl im Bereich der Achsen 2, 3 als auch im Bereich der Zusatzachsen 23, 24 bzw. an dem Verbindungspunkt zwischen dem mittleren Seitenträger 4.1, 5.1 mit einem äußeren Seitenträger 4.2, 5.2 mit im einzelnen nicht dargestellten Kreuzgelenken 30 bzw. 31 versehen sind.

Am Außenende des Mittelträgers 1 greift in einem Gelenk mit fahrtrichtungsparalleler Achse eine Stellstangeneinheit 33 an. Die Stellstangeneinheit 33 umfaßt gelenkig miteinander über einen Stellhebel 33.1 verbundene Stellstangen 33.2, 33.3. Die Stellstange 33.2 ist mit dem äußeren Ende des Mittelträgers 1 verbunden und die andere Stellstange 33.3 an dem Lager- und Getriebegehäuse angelenkt, wobei der Stellhebel 33.1 mit seinem einen Ende am äußeren Ende des mittleren Seitenträgers 4.1, 5.1 gelenkig angreift und mit seinem anderen Ende gelenkig mit den Stellstangen 33.2 bzw. 33.3 verbunden ist. Die gelenkige Verbindung zwischen Stellstange 33.3 und dem Lager- und Getriebegehäuse 28 ist auf der in der Betriebsstellung oberen Seite (Fig. 10) vorgesehen. Die Lage der Gelenke 32.1, 32.2, 34.1, 34.2 ist dabei so gewählt, daß beim Hochschwenken der Seitenträger 4.1, 4.2, 5.1, 5.2 die Stellstangen 33.2 und 33.3 als Zugstangen wirken und unter Veränderung ihrer Relativlage zu den Seitenträgern über eine Schwenkbewegung des Stellhebels 33.1 um die Gelenkachse 34.2 die Klappeinheit aus Kreiselrechen 6.1 bzw. 9.2 und Gehäuse 28 in die Transportschutzstellung überführen. Beim Herabschwenken der Seitenträger 4.1, 4.2, 5.1, 5.2 führen die Stellstangen 33.2, 33.2 sozusagen als Druckstangen wirkend die Klappeinheit wieder in ihre Betriebsstellung gemäß Fig. 10 zurück. In beiden Stellungen wirkt die Stellstangeneinheit 33 zusätzlich als Verriegelungselement,durch die die Klappeinheiten in ihrer jeweiligen Lage zu den Seitenträgern arretiert sind.

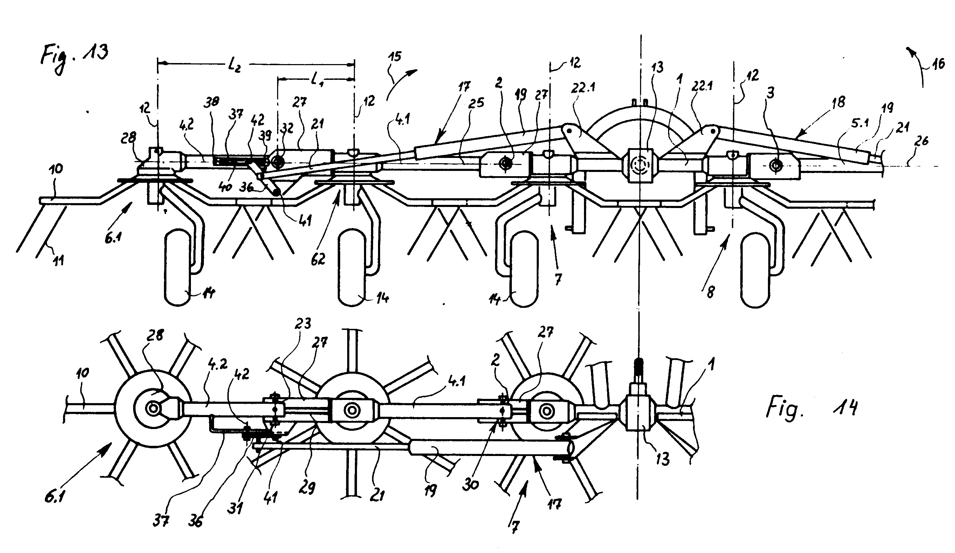

Bei dem in den Fig. 13 bis 15 veranschaulichten Ausführungsbeispiel sind die äußeren Seitenträger 4.2, 5.2 mitsamt den diesen zugeordneten äußeren Kreiselrechen 6.1, 9.2 um die fahrtrichtungsparallelen Zusatzachsen 23, 24 einwärts gegenüber den in Transportstellung vertikal ausgerichteten mittleren Seitenträgern 4.1, 5.1 um mehr als 90° zu verschwenken, wonach diese Teile in einem Transportraum gelegen sind, der sich oberhalb des Mittelträgers 1 erstreckt und der seitlich in der Transportstellung durch die mittleren Seitenträger 4.1, 5.1 sowie an deren äußeren Enden angeordnete Gabelteile 27 zur gelenkigen Halterung der äußeren Seitenträger 4.2, 5.2 begrenzt ist. Der Lageabstand $l_1$ des Schnittpunktes einer Zusatzachse 23, 24 mit der entsprechenden Längsmittelachse 25, 26 der Seitenträger hat dabei im Verhältnis zum Lageabstand $l_2$ der Hochachsen 12 der Kreiselrechen 6.1 zu 6.2 bzw. 9.1, 9.2 der jeweiligen Seitenträger zueinander wiederum ein derartiges Maß, daß das Verhältnis von $l_1$ zu $l_2$ größer oder gleich 0,3 ist. Der seitliche Lageabstand $l_1$ der jeweiligen Zusatzachsen 23, 24 ist durch die Abmessungen des Gabelteiles 27, in dem die äußeren Seitenträger 4.2, 5.2 gelenkig gehaltert sind, in baulich einfacher Weise zu variieren. In dem veranschaulichten Ausführungsbeispiel hat dieses jeweilige Gabelteil 27 eine derartige Länge, daß eine Einwärtsschwenkbewegung der äußeren Seitenträger 4.2, 5.2 mit den jeweils zugeordneten Kreiselrechen, 6.1, 9.2 so weit durchzumachen ist, daß die in der Transportschutzstellung unteren Arme 10 bzw. Rechzinken 11 nahe dem Mittelträger enden. Bei den gewählten Größenverhältnisssen in dem veranschaulichten Ausführungsbeispiel ergibt sich hierbei ein Verhältnis $l_1$ zu $l_2$ von ca. 0,4, wobei die Hochachsen 12 der äußeren Kreiselrechen 6.1, 9.2 in der Transportschutzstellung die Horizontale unter einem Winkel von etwa 20° schneiden. In dieser Transportschutzstellung hat die Maschine eine Transporthöhe, wie sie in etwa von einem Gerät mit insgesamt vier Kreiselrechen bekannter Ausbildung entspricht, wobei allerdings die einwärts oberhalb des Mittelträgers gelegenen äußeren Seitenträger mitsamt ihren Teilen demgegenüber die Gesamtschwerpunktlage der Maschine noch günstig beeinflussen und in diesem Raum ohne Verletzungsrisiko für Bedienpersonen sicher gelegen sind. Um insbesondere die äußeren Seitenträger in diese Transportschutzstellung ohne Vergrößerung der Maschinenbreite überführen zu können, sind die Laufräder 14 der äußeren Seitenträger 4.2, 5.2 gegenüber den Hochachsen 12 der äußeren Kreiselrechen 6.1, 9.2 seitlich zur jeweiligen Außenseite der Maschine derart versetzt angeordnet, daß sie in der Transportschutzstellung (Fig. 15) übereinander zu liegen in der Lage sind. Irgendwelche Behinderungen beim Verschwenken der Seitenträger fallen nicht an. Dazu sind die Laufräder 14 über entsprechend abgekröpfte Halter befestigt. Die Laufräder 14 des Mittelträgers 1 der Maschine sind ebenfalls gegenüber den Hochachsen 12 der Kreiselrechen 7 bzw. 8 versetzt, wodurch sich in der Transportschutzstellung eine verbesserte Kippstabilität und damit Standsicherheit ergibt.

Bei dem Ausführungsbeispiel nach den Fig. 13 bis 15 ist für beide Seitenträgereinheiten jeweils ein Druckmittelantrieb 17, 18 vorgesehen, der einenends über ein Flanschteil 22.1 mit dem Mittelträger 1 verbunden ist und anderenends im Mittelbereich eines Stellhebels 36 gelenkig angreift. Ein Ende des Stellhebels 36 ist längsverschieblich und gelenkig an einem Führungskulissenteil 37 geführt, das an dem äußeren Seitenträger 4.2 bzw. 5.2 gehaltert ist und dessen Führungskulisse Endanschläge 38 und 39 aufweist. Mit seinem gegenüberliegenden Ende ist der Stellhebel 36 an einem Anschlußverbindungteil 40 der Gabel 27 angelenkt, wobei die Lage der Gelenke 41, 42 und die der Endanschläge 38, 39 jeweils so gewählt ist, daß beim Einfahren der Druckmittelantriebe 17, 18 der Stellhebel nach Anliegen am inneren Endanschlag 39 beide Seitenträger 4.1, 4.2 in die Transportstellung überführt, so daß in baulich einfacher Weise auch bei diesem Ausführungsbeispiel mit jeweils nur einem Druckmittelantrieb je Seitenträgereinheit die Maschinenteile in die Transportstellung zu überführen sind.

Anstelle einer Stellstangeneinheit 33 kann bei dem Ausführungsbeispiel nach den Fig. 10 und 12 im übrigen zwischen der Klappeinheit und den Seitenträgern auch irgendeine andere geeignete Antriebs- oder Antriebsübertragungsvorrichtung vorgesehen sein, z. B. in Gestalt eines unabhängigen Druckmittelantriebes, dessen Beaufschlagung auf die Beaufschlagung für Druckmittelantriebe 17 abgestimmt sein kann. Analoges gilt auch für das Ausführungsbeispiel nach den Fig. 13 bis 15. Die Schwenkachsen 2, 3, 23 und 24 sowie die Gelenke 32.1, 32.2, 34.1, 34.2 sind bei den beschriebenen Ausführungsbeispielen fahrtrichtungsparallel ausgerichtet, jedoch können hier gewisse Abweichungen vorgenommen werden, die ein gewisses Maß nicht überschreiten sollten. Gleichfalls ist es möglich, daß die Seitenträger bzw. die Kreiselrechen derart baulich vorgesehen sind, daß sich die Hochachsen 12 der Kreiselrechen der äußeren Seitenträger in der Betriebsstellung nach vorn zur Horizontalen neigen, wodurch erreicht werden kann, daß sich beim Anheben der Maschine die in der Transportstellung befindlichen Kreiselrechen nicht zu nahe an den Schlepper heranbewegen.

**Patentansprüche**

1. Heuwerbungsmaschine mit einem an einen landwirtschaftlichen Schlepper anhäng- oder an dessen Dreipunkthydraulik anbaubaren Querträger, der einen Mittelträger (1) und zumindest jeweils einen beidseits des Mittelträgers vorgesehenen, um eine etwa fahrtrichtungsparallele Achse (2, 3) gelenkig verbundenen Seitenträger (4, 4.1, 4.2, 5, 5.1, 5.2) umfaßt, mit einer Anzahl von in Betriebsstellung zum Boden hin gerichtete Rechzinken (11) aufweisenden Kreiselrechen (6, 6.1, 6.2, 7, 8, 9, 9.1, 9.2), die am Querträger um Hochachsen (12) drehbar gelagert und mittels einer im Querträger gelagerten Antriebswelle (29) antreibbar sind, mit Laufrädern (14), welche die Maschine während des Betriebs auf dem Boden abstützen und jeweils unter einem Kreiselrechen (6, 6.1, 6.2, 7, 8, 9, 9.1, 9.2) angeordnet sind, und mit einem den Seitenträgern (4, 4.1, 4.2, 5, 5.1, 5.2) zugeordneten Durckmittelantrieb (17, 18) zum Hochschwenken der Seitenträger (4, 4.1, 4.2, 5, 5.1, 5.2) und Festlegen in einer Transportstellung, wobei jedem Seitenträger (4, 4.1, 4.2, 5, 5.1, 5.2) ein Kreiselrechen (6, 6.1, 6.2, 9, 9.1, 9.2) zugeordnet ist, der sich am Außenendbereich seines Seitenträgers (4, 4.1, 4.2, 5, 5.1, 5.2) abstützt, und wobei die äußeren Kreiselrechen (6, 6.1; 9, 9.1) um eine Zusatzachse (23, 24) in eine Transportschutzstellung überführbar sind, **dadurch gekennzeichnet,** daß die Zusatzachsen (23, 24) etwa fahrtrichtungsparallel ausgerichtet sind und der einem äußeren Seitenträger (4, 4.1; 5, 5.2) zugeordnete Kreiselrechen (6, 6.1; 9, 9.2) um zumindest etwa 90° in eine Transportschutzstellung um die Zusatzachse verschwenkbar ist, wobei die Antriebswelle (29) im Bereich der Seitenträger (4, 4.1; 5, 5.2) mit einer Gelenkvorrichtung (31) mit sich kreuzenden Gelenkachsen versehen ist, die jeweils mit der Zusatzachse (23, 24) in einer Ebene liegen, und wobei der Abstand zwischen den Hochachsen (12) der äußeren Kreiselrechen (6, 6.1; 9, 9.2) zur jeweiligen Zusatzachse (23, 24) den Abstand zwischen einer der fahrtrichtungsparallelen Achsen (2, 3) und der Vertikallängsmittelebene der Maschine unterschreitet.

2. Heuwerbungsmaschine nach Anspruch 1, **durch gekennzeichnet,** daß der einem äußeren Seitenträger (4, 4.1; 5, 5.2) zugeordnete Kreiselrechen (6, 6.1; 9, 9.2) in eine Transportschutzstellung klappbar ist, in der sich dessen Hochachse (12) annähernd parallel zur Längsmittelachse (25, 26) des zugehörigen Seitenträgers erstreckt.

3. Heuwerbungsmaschine nach Anspruch 1 oder 2, **dadurch gekennzeichnet,** daß die Zusatzachse (23, 24) und die Hochachse (12) der einem Seitenträger (4, 4.1, 5, 5.2) zugeordneten Kreiselrechen (6, 6.1, 9, 9.2) einander schneiden.

4. Heuwerbungsmaschine nach einem der Ansprüche 1 bis 3, **dadurch gekennzeichnet,** daß die Antriebswelle (29) im Bereich der Seitenträger mit einem Kreuzgelenk (31) versehen ist, dessen Gelenkachsen jeweils mit der Zusatzachse (23, 24) in einer Ebene liegen.

5. Heuwerbungsmaschine nach einem der Ansprüche 1 bis 4, **dadurch gekennzeichnet,** daß eine Stellstange (33) vorgesehen ist, die jeweils am Außenende des Mittelträgers (1) und an einem Lager- und Getriebegehäuse (28) einer jeweils den in Transportschutzstellung klappbaren Kreiselrechen umfassenden Klappeinheit über Gelenke (32, 34) mit etwa fahrtrichtungsparallelen Gelenkachsen angreift, beim Hochschwenken der Seitenträger als Zugstange die Klappeinheit in Transportschutzstellung überführt und in beiden Endstellungen der Seitenträger die Klappeinheit in ihrer jeweiligen Lage zum Seitenträger (4, 5) arretiert.

6. Heuwerbungsmaschine nach Anspruch 5, **dadurch gekennzeichnet,** daß zwischen den Seitenträgern und der Klappeinheit eine Zugfeder (35) vorgesehen ist, welche die Klappeinheit in die Betriebsstellung zurückzuklappen bestrebt ist.

7. Heuwerbungsmaschine nach einem der Ansprüche 1 bis 6, **dadurch gekennzeichnet,** daß die Zusatzachsen (23, 24) die Längsmittelachsen (25, 26) der Seitenträger (4.1, 4.2, 5.1, 5.2) in deren Betriebsstellung mit einem seitlichen Lageabstand ($l_1$) zur Hochachse (12) des Kreiselrechens (6.2, 9.1) des mittleren Seitenträgers (4.1, 5.1) schneiden und das Verhältnis von seitlichem Lageabstand ($l_1$) zum Abstand ($l_2$) der Hochachsen (12) der Kreiselrechen (6.1, 6.2, 9.1, 9.2) der jeweiligen beiden Seitenträger (4.1, 4.2, 5.1, 5.2) zueinander größer oder gleich 0,3 ist.

8.  Heuwerbungsmaschine nach einem der Ansprüche 1 bis 7, **dadurch gekennzeichnet,** daß die jeweilige Zusatzachse (23, 24) die Hochachse (12) des Kreiselrechens (6.1, 6.2) des äußeren Seitenträgers (4.2, 5.2) oder nahe dieser die Längsmittelachse des äußeren Seitenträgers (4.2, 5.2) schneidet und der äußere Kreiselrechen (6.1, 9.2) um etwa 90° in die Transportschutzstellung klappbar ist, in der sich seine Hochachse (12) annähernd parallel zur Längsmittelachse seines Seitenträgers (4.2, 5.2) erstreckt.

9.  Heuwerbungsmaschine nach einem der Ansprüche 1 bis 8, **dadurch gekennzeichnet,** daß die äußeren Seitenträger (6.1, 9.2) mitsamt den jeweiligen Kreiselrechen (6.1, 9.2) in die Transportschutzstellung klappbar sind.

10. Heuwerbungsmaschine nach Anspruch 9, **dadurch gekennzeichnet,** daß die äußeren Seitenträger (4.2, 5.2) mit den äußeren Kreiselrechen (6.1, 9.2) um mehr als 90° in ihre Transportschutzstellung klappbar sind, in der sich diese in einem oberhalb des Mittelträgers (1) gelegenen sowie zumindest bereichsweise seitlich durch in Transportstellung überführte mittlere Seitenträger (4.1, 5.1) begrenzbaren Raum erstrecken.

11. Heuwerbungsmaschine nach Anspruch 10, **dadurch gekennzeichnet,** daß in der Transportschutzstellung die Hochachsen (12) der äußeren Kreiselrechen (6.1, 9.2) die Horizontale unter einem spitzen Winkel schneiden.

12. Heuwerbungsmaschine nach Anspruch 11, **dadurch gekennzeichnet,** daß das Verhältnis des seitlichen Lageabstandes ($l_1$) zum Abstand ($l_2$) in etwa 0,4 ist und die Hochachsen (12) der äußeren Kreiselrechen (6.1, 9.2) in der Transportschutzstellung die Horizontale unter einem Winkel von etwa 20° schneiden.

13. Heuwerbungsmaschine nach einem der Ansprüche 1 bis 12, **dadurch gekennzeichnet,** daß die Laufräder (14) der äußeren Seitenträger (4.2, 5.2) gegenüber den Hochachsen (12) der äußeren Kreiselrechen (6.1, 9.2) seitlich zur jeweiligen Außenseite der Maschine versetzt angeordnet sind.

14. Heuwerbungsmaschine nach einem der Ansprüche 1 bis 13 mit einem Druckmittelantrieb (17, 18) zum Verschwenken der Seitenträger (4.1, 4.2, 5.1, 5.2), **dadurch gekennzeichnet,** daß der Druckmittelantrieb (17, 18) an dem mittleren Seitenträger (4.1, 5.1) angreift und eine Stellstangeneinheit (33) vorgesehen ist, die jeweils am Außenende des Mittelträgers (1) und an einem Lager- und Getriebegehäuse (28) einer jeweils den in Transportschutzstellung klappbaren Kreiselrechen (6.1, 9.2) umfassenden Klappeinheit über Gelenke (32.1, 32.2, 34.1, 34.2) mit etwa fahrtrichtungsparallelen Gelenkachsen angreift, beim Hochschwenken der äußeren Seitenträger (4.2, 5.2) als Zugstangeneinheit die Klappeinheit in Transportschutzstellung überführt und in beiden Endstellungen der äußeren Seitenträger (4.2, 5.2) die Klappeinheit in ihrer jeweiligen Lage zum äußeren Seitenträger (4.2, 5.2) arretiert.

15. Heuwerbungsmaschine nach Anspruch 14, **dadurch gekennzeichnet,** daß die Stellstangeneinheit (33) gelenkig miteinander über einen Stellhebel (33.1) verbundene Stellstangen (33.2, 33.3) umfaßt, eine Stellstange (33.2) mit dem Mittelträger (1) sowie die andere Stellstange (33.3) mit dem Lager- und Getriebegehäuse (28) verbindbar ist und der Stellhebel (33.1) gelenkig am äußeren Ende des mittleren Seitenträgers (4.1, 5.1) angreift.

16. Heuwerbungsmaschine nach einem der Ansprüche 1 bis 15 mit einem Druckmittelantrieb (17, 18) zum Verschwenken der Seitenträger (4.1, 4.2, 5.1, 5.2), **dadurch gekennzeichnet,** daß der Druckmittelantrieb (17, 18) gelenkig an einem Stellhebel (36) angreift, der einenends über ein Gelenk mit fahrtrichtungsparalleler Gelenkachse mit dem äußeren Ende des mittleren Seitenträgers (4.1, 5.1) verbunden und anderenends beweglich in einer am äußeren Seitenträger (4.2, 5.2) vorgesehenen, Endanschläge (38, 39) aufweisenden Führungskulisse (37) angeordnet ist.

17. Heuwerbungsmaschine nach Anspruch 3, **dadurch gekennzeichnet,** daß die Schwenkachse (2, 3) die Hochachse (12) des zugeordneten Kreiselrechens (7, 8) in deren Schnittpunkt mit der Längsmittelachse des Mittelträgers (1) schneidet.

18. Heuwerbungsmaschine nach einem der Ansprüche 1 bis 17, **dadurch gekennzeichnet,** daß die Hochachsen (12) der Kreiselrechen (7, 8) des Mittelträgers (1) in quer zur Fahrtrichtung verlaufenden Ebenen angeordnet sind, die die Schwenkachsen (2, 3) der Seitenträger (4, 5) unter einem Winkel von weniger als 90° schneiden.

19. Heuwerbungsmaschine nach Anspruch 18, **dadurch gekennzeichnet,** daß die Schwenkachse (2, 3) die zugeordnete Hochachsenebene unter einem Winkel von 65° schneiden.

20. Heuwerbungsmaschine nach Anspruch 18 oder 19, **dadurch gekennzeichnet,** daß die Schwenkachsen (2, 3) etwa horizontal verlaufen.

21. Heuwerbungsmaschine nach einem der Ansprüche 18 bis 20, **dadurch gekennzeichnet,** daß die Hochachse (12) der Kreiselrechen (7, 8) und die jeweils zugeordnete Schwenkachse (2 bzw. 3) einander schneiden.

## Claims

1. A hay-making machine comprising, adapted for attachment or coupling to the hydraulic three-point suspension system of an agricultural tractor, a cross-member comprising a central member (1) and, on both sides of the central member, at least one lateral member (4, 4.1, 4.2, 5, 5.1, 5.2) connected to articulate about an axis (2, 3) which is substantially parallel with the direction of travel and with a number of rotary rakes (6, 6.1, 6.2, 7, 8, 9, 9.1, 9.2) which in the operating position have rake tines (11) which are directed towards the ground, the rotary rakes being mounted on the cross-member to rotate about top spindles (12) and being capable of being driven by a driving shaft (29) mounted in the cross-member, with wheels (14) which support the machine on the ground while it is in operation, the wheels being disposed under respective rotary rakes (6, 6.1, 6.2, 7, 8, 9, 9.1, 9.2) and with, associated with the side members (4, 4.1, 4.2, 5, 5.1, 5.2), a pressurised medium drive (17, 18) for upwardly pivoting the side members (4, 4.1, 4.2, 5, 5.1, 5.2) and for fixing them in a transit position, there being associated with each side member (4, 4.1, 4.2, 5, 5.1, 5.2) a rotary rake (6, 6.1, 6.2, 9, 9.1, 9.2) which is supported at the outer end portion of its side member (4, 4.1, 4.2, 5, 5.1, 5.2), the outer rotary rakes (6, 6.1; 9, 9.1) being capable of being moved about an auxiliary spindle (23, 24) into a transit protection position, characterised in that the auxiliary spindles (23, 24) are aligned substantially parallel with the direction of travel while the rotary rake (6, 6.1, 9, 9.2) associated with an outer side member (4, 4.1, 5, 5.2) can be pivoted through at least about 90° about the auxiliary spindle and into a transit protection position, the drive shaft (29) being provided in the region of the side members (4, 4.1, 5, 5.2) with an articulating device (31) having intersecting hinge pins which are in one plane with the auxiliary spindle (23, 24), the distance between the top spindles (12) of the outer rotary rakes (6, 6.1, 9, 9.2) and the relevant auxiliary spindle (23, 24) being less than the distance between one of the spindles (2, 3) parallel with the direction of travel and the vertical longitudinal median plane through the machine.

2. A hay-making machine according to Claim 1, characterised in that the rotary rake (6, 6.1, 9. 9.2) associated with an outer side member (4, 4.1, 5, 5.2) can be folded into a transit protection position in which its top spindle (12) extends virtually parallel with the longitudinal median axis (25, 26) of the associated side member.

3. A hay-making machine according to Claim 1 or 2, characterised in that the auxiliary spindles (23, 24) and the top spindle (12) of the rotary rakes (6, 6.1, 9, 9.2) associated with side members (4, 4.1, 5, 5.2) intersect each other.

4. A hay-making machine according to one of Claims 1 to 3, characterised in that the drive shaft (29) is in the region of the side members provided with a cardan joint (31) of which the hinge pins are in each case in one plane with the auxiliary spindles (23, 24).

5. A hay-making machine according to one of Claims 1 to 4, characterised in that a positioning rod (33) is provided engaging the outer end of the central member (1) and a bearing and transmission housing (28) of a hinge unit comprising rotary rakes which can be folded into the transit protection position by joints (32, 34) having hinge pins which are substantially parallel with the direction of travel and which, when the side members are pivoted upwardly, changes the hinging unit to the transit protection position as a draw bar, the hinge unit being locked in its relevant position in relation to the side member (4, 5) when the side members are in the two extreme positions.

6. A hay-making machine according to Claim 5, characterised in that between the side members and the hinge unit, a traction spring (35) is provided which seeks to fold the hinge unit back into its working position.

7. A hay-making machine according to one of Claims 1 to 6, characterised in that the auxiliary spindles (23, 24) intersect the longitudinal median axes (25, 26) of the side members (4.1, 4.2, 5.1, 5.2) in their operating position with a lateral positional gap ($l_1$) in relation to

the top spindle (12) of the rotary rake (6.2, 9.1) of the middle side member (4.1, 5.1), the ratio of lateral positional gap ($l_1$) to the gap ($l_2$) between the top spindles (12) of the rotary rakes (6.1, 6.2, 9.1, 9.2) of whichever are the two side members (4.1, 4.2, 5.1, 5.2) in respect of each other being greater than or equal to 0.3.

8. A hay-making machine according to one of Claims 1 to 7, characterised in that the relevant auxiliary spindle (23, 24) cuts the top spindle (12) of the rotary rake (6.1, 6.2) of the outer side member (4.2, 5.2) or close to this the longitudinal central axis through the outer side member (4.2, 5.2) while the outer rotary rake (6.1, 9.2) can be moved through about 90° into the transit protection position in which its top spindle (12) extends substantially parallel with the longitudinal central axis of its side member (4.2, 5.2).

9. A hay-making machine according to one of Claims 1 to 8, characterised in that the outer side members (6.1, 9.2) can be swung into the transit protection position together with the relevant rotary rakes (6.1, 9.2).

10. A hay-making machine according to Claim 9, characterised in that the outer side members (4.2, 5.2) with the outer rotary rakes (6.1, 9.2) can be swung through more than 90° into their transit protection position in which they extend within a space situated above the central member (1) and capable of being defined at least zone-wise by central side members (5.1, 4.1) which are moved into the transit position.

11. A hay-making machine according to Claim 10, characterised in that in the transit protection position the top spindles (12) of the outer rotary rakes (6.1, 9.2) intersect the horizontal at an acute angle.

12. A hay-making machine according to Claim 11, characterised in that the ratio of the lateral positional gap ($l_1$) to the gap ($l_2$) is approximately 0.4 and in that the top spindles (12) of the outer rotary rakes (6.1, 9.2) when in the transit protection position intersect the horizontal at an angle of about 20°.

13. A hay-making machine according to one of Claims 1 to 12, characterised in that the wheels (14) of the outer side members (4.2, 5.2) are in relation to the top spindles (12) of the outer rotary rakes (6.1, 9.2) laterally offset to the relevant outside of the machine.

14. A hay-making machine according to one of Claims 1 to 13 with a pressurised medium drive (17, 18) for pivoting the side members (4.1, 4.2, 5.1, 5.2), characterised in that the pressurised medium drive (17, 18) engages the central side member (4.1, 5.1) and in that a positioning rod unit (33) is provided which engages the outer end of the central member (1) and a bearing and transmission housing (28) of a hinge unit comprising rotary rakes (6.1, 9.2) which can be swung into the transit protection position via joints (32.1, 32.2, 34.1, 34.2) with hinge pins substantially parallel with the direction of travel and which, during upwards pivoting of the outer side members (4.2, 5.2) can, as a draw bar unit, move the hinging unit into the transit protection position while in both extreme positions of the outer side members (4.2, 5.2) the hinge unit can be locked in its relevant position in relation to the outer side members (4.2, 5.2).

15. A hay-making machine according to Claim 14, characterised in that the positioning rod unit (33) comprises positioning rods (33.2, 33.3) which are articulatingly connected to one another via a positioning lever (33.1), a positioning rod (33.2) being capable of being connected to the central member (1) while the other positioning rod (33.3) can be connected to the bearing and transmission housing (28) while the positioning lever (33.1) articulatingly engages the outer end of the central side member (4.1, 5.1).

16. A hay-making machine according to one of Claims 1 to 15 with a pressurised medium drive (17, 18) for pivoting the side members (4.1, 5.2, 5.1, 5.2), characterised in that the pressurised medium drive (17, 18) articulatingly engages a positioning lever (36) which is connected at one end by a join with a hinge pin parallel with the direction of travel to the outer end of the middle side member (4.1, 5.1) while its other end is movably disposed in a guide block (37) comprising end stops (33, 35) and provided on the outer side member (4.2, 5.2).

17. A hay-making machine according to Claim 3, characterised in that the pivoting axis (2, 3) intersect the top spindle (12) of the associated rotary rake (7, 8) at the point at which it intersects the longitudinal axis of the central member (1).

18. A hay-making machine according to one of Claims 1 to 17, characterised in that the top spindles (12) of the rotary rakes (7, 8) of the central member (1) are disposed in planes which extend cross-wise to the direction of travel and which intersect the pivoting axes (2, 3) of the side members (4, 5) at an angle of less than 90°.

19. A hay-making machine according to Claim 18, characterised in that the pivoting axes (2, 3) intersect the associated top spindle plane at an angle of 65°.

20. A hay-making machine according to Claim 18 or 19, characterised in that the pivoting axes (2, 3) extend substantially horizontally.

21. A hay-making machine according to one of Claims 18 to 20, characterised in that the top spindle (12) of the rotary rakes (7, 8) and the relevant associated pivoting axis (2, 3) intersect each other.

**Revendications**

1. Machine de fenaison comportant une poutre transversale susceptible d'être accrochée à un tracteur à usage agricole ou d'être montée sur son système de levage hydraulique en trois points, poutre transversale composée d'une poutre centrale (1) et d'au moins une poutre latérale (4, 4.1, 4.2, 5, 5.1, 5.2) prévue de chaque côté de la poutre centrale, et reliée par une articulation autour d'un axe (2, 3) sensiblement parallèle à la direction de déplacement, avec un certain nombre de râteaux rotatifs (6, 6.1, 6.2, 7, 8, 9, 9.1, 9.2) munis de dents (11) qui, en position de fonctionnement, sont dirigées vers le sol, ces râteaux étant montés à rotation autour d'axes verticaux (12) sur la poutre transversale et entraînés par un arbre d'entraînement (29) logé dans la poutre transversale, avec des roues de support (14) qui soutiennent la machine sur le sol, en fonctionnement, ces roues étant prévues chaque fois sous un râteau rotatif (6, 6.1, 6.2, 7, 8, 9, 9.1, 9.2), ainsi qu'un moyen de commande à vérins hydrauliques (17, 18) associé à chaque poutre latérale (4, 4.1, 4.2, 5, 5.1, 5.2) pour relever les poutres latérales (4, 4.1, 4.2, 5, 5.1, 5.2) et les bloquer en position de transport, un râteau rotatif (6, 6.1, 6.2, 9, 9.1, 9.2) étant associé à chaque poutre latérale (4, 4.1, 4.2, 5, 5.1, 5.2), râteau qui s'appuie dans la zone de l'extrémité extérieure de sa poutre latérale (4, 4.1, 4.2, 5, 5.1, 5.2) et les râteaux rotatifs extérieurs (6, 6.1 ; 9, 9.1) pouvant être mis dans une position de protection de transport par pivotement autour d'un axe complémentaire (23, 24), machine caractérisée en ce que les axes complémentaires (23, 24) sont alignés sensiblement parallèlement à la direction de déplacement et le râteau rotatif (6, 6.1 ; 9, 9.2) associé à l'une des poutres latérales extérieures (4, 4.1 ; 5, 5.2) peut basculer au moins environ de 90° autour de son axe complémentaire dans une position de protection pour le transport, l'arbre d'entraînement (29) ayant, au niveau des poutres latérales (4, 4.1 ; 5, 5.2), un dispositif articulé (31) avec des axes d'articulation croisés situés chaque fois avec l'axe complémentaire (23, 24) dans un plan et la distance entre les axes verticaux (12) des râteaux rotatifs (6, 6.1 ; 9, 9.2) extérieurs et les axes complémentaires (23, 24), étant inférieur à la distance entre l'un des axes (2, 3) parallèles à la direction de déplacement et le plan longitudinal médian vertical de la machine.

2. Machine de fenaison selon la revendication 1, caractérisée en ce que le râteau rotatif (6, 6.1 ; 9, 9.2) associé à une poutre latérale extérieure (4, 4.1 ; 5, 5.2) peut être plié dans une position de protection pour le transport, position dans laquelle son axe vertical (12) est sensiblement parallèle à l'axe longitudinal médian (25, 26) de la poutre latérale correspondante.

3. Machine de fenaison selon les revendications 1 ou 2, caractérisée en ce que l'axe complémentaire (23, 24) et l'axe vertical (12) des râteaux rotatifs (6, 6.1, 9, 9.2) associés à l'une des poutres latérales (4, 4.1, 5, 5.2) se coupent.

4. Machine de fenaison selon l'une des revendications 1 à 3, caractérisée en ce que l'arbre d'entraînement (29) est muni chaque fois d'une articulation à cardan (31) au niveau de la poutre latérale, articulation dont les axes se situent dans un plan avec l'axe complémentaire (23, 24).

5. Machine de fenaison selon l'une des revendications 1 à 4, caractérisée par une barre de réglage (33) reliée respectivement à l'extrémité extérieure de la poutre centrale (1) et à un boîtier de palier et de transmission (28) d'un ensemble basculant comprenant un râteau rotatif susceptible d'être replié en position de protection de transport, par des articulations (32, 34) avec des axes d'articulation sensiblement parallèles à la direction de déplacement, et lors du relevage des poutres latérales, cette barre fonctionne comme barre de traction pour faire passer l'ensemble basculant en position de protection de transport et dans les deux positions d'extrémité de la poutre latérale, l'ensemble basculant peut se bloquer dans sa position respective par rapport à la poutre latérale (4, 5).

6. Machine de fenaison selon la revendication 5, caractérisée en ce qu'entre les poutres latérales et l'ensemble basculant il est prévu un ressort de traction (35) qui tend à replier l'ensemble basculant vers la position de fonctionnement.

7. Machine de fenaison selon l'une des revendications 1 à 6, caractérisée en ce qu'en position de fonctionnement, les axes complémentaires (23, 24) coupent les axes des poutres latérales (4.1, 4.2, 5.1, 5.2) à une distance latérale de position, ($l_1$) par rapport à l'axe vertical (12) du râteau rotatif (6.2, 9.1) de la poutre latérale moyenne (4.1, 5.1) et le rapport entre la distance de position latérale ($l_1$) et la distance ($l_2$) des axes verticaux (12) des râteaux rotatifs (6.1, 6.2, 9.1, 9.2) des deux poutres latérales respectives (4.1, 4.2, 5.1, 5.2) est égal ou supérieur à 0,3.

8. Machine de fenaison selon l'une des revendications 1 à 7, caractérisée en ce que l'axe complémentaire respectif (23, 24) coupe l'axe vertical (12) du râteau rotatif (6.1, 6.2) de la poutre latérale extérieure (4.2, 5.2) ou passe au voisinage de celui-ci, l'axe longitudinal médian de la poutre latérale extérieure (4.2, 5.2) et le râteau rotatif extérieur (6.1, 9.2) peut basculer en position de protection de transport sur environ 90°, position dans laquelle son axe vertical (12) est sensiblement parallèle à l'axe longitudinal médian de sa poutre latérale (4.2, 5.2).

9. Machine de fenaison selon l'une des revendications 1 à 8, caractérisée en ce que les poutres latérales extérieures (6.1, 9.2) et les râteaux rotatifs respectifs (6.1, 9.2) peuvent basculer dans la position de protection de transport.

10. Machine de fenaison selon la revendication 9, caractérisée en ce que les poutres latérales extérieures (4.2, 5.2) et leurs râteaux rotatifs extérieurs (6.1, 9.2) peuvent basculer de plus de 90° dans leur position de protection de transport dans laquelle ils passent dans le volume situé au-dessus de la poutre centrale (1) ce volume étant au moins limité partiellement, latéralement par les poutres latérales médianes (4.1, 5.1) passées en position de transport.

11. Machine de fenaison selon la revendication 10, caractérisée en ce qu'en position de protection de transport, les axes verticaux (12) des râteaux rotatifs extérieurs (6.1, 9.2) coupent la direction horizontale suivant un angle aigu.

12. Machine de fenaison selon la revendication 11, caractérisée en ce que le rapport de la distance latérale de position ($l_1$) à la distance ($l_2$) est de l'ordre de 0,4 et les axes verticaux (12) des râteaux rotatifs extérieurs (6.1, 9.2) coupent en position de protection de transport, la direction horizontale sous un angle d'environ 20°.

13. Machine de fenaison selon l'une des revendications 1 à 12, caractérisée en ce que les roues de roulement (14) des poutres latérales extérieures (4.2, 5.2) sont décalées latéralement du côté extérieur respectif de la machine par rapport aux axes verticaux (12) des râteaux rotatifs extérieurs (6.1, 9.2).

14. Machine de fenaison selon l'une des revendications 1 à 13, comportant un moyen de commande à vérins hydrauliques (17, 18) pour basculer les poutres latérales (4.1, 4.2, 5.1, 5.2), machine caractérisée en ce que le moyen de commande à vérins hydrauliques (17, 18) agit sur la poutre latérale moyenne (4.1, 5.1) et une unité à barre de réglage (33) est prévue qui est reliée respectivement à l'extrémité extérieure de la poutre centrale (1) et à un boîtier de palier de transmission (28) d'une unité basculante comprenant les râteaux rotatifs basculants (6.1, 9.2) pour passer en position de protection de transport, ce basculement se faisant par l'intermédiaire d'articulations (32.1, 32.2, 34.1, 34.2) d'axe d'articulation sensiblement parallèle à la direction de déplacement, et lors du relevage des poutres latérales extérieures (4.2, 5.2), cette barre fonctionne comme ensemble à barre de traction qui conduit l'ensemble basculant en position de protection de transport et dans les deux positions d'extrémité de la poutre latérale extérieure (4.2, 5.2), l'ensemble basculant est bloqué dans sa position respective par rapport aux poutres latérales extérieures (4.2, 5.2).

15. Machine de fenaison selon la revendication 14, caractérisée en ce que l'ensemble à barre de réglage (33) comprend des barres de réglage (33.2, 33.3) reliées de manière articulée par l'intermédiaire d'un levier de réglage (33.1), une barre de réglage (33.2) pouvant être reliée à la poutre centrale (1) et l'autre barre de réglage (33.3) avec le boîtier de palier et de transmission (28) et le levier de réglage (33.1) est relié de manière articulée à l'extrémité extérieure de la poutre latérale moyenne (4.1, 5.1).

16. Machine de fenaison selon l'une des revendications 1 à 15, comportant un moyen de commande à vérins hydrauliques (17, 18) pour basculer les poutres latérales (4.1, 4.2, 5.1, 5.2), caractérisée en ce que le moyen de commande à vérins hydrauliques (17, 18) est relié de manière articulée à un levier de réglage (36) dont une extrémité est reliée par une articulation d'axe parallèle à la direction de déplacement, à l'extrémité extérieure de la poutre latérale moyenne (4.1, 5.1) et l'autre extrémité est montée de manière mobile dans une coulisse de guidage (37) à butée de fin de course (38, 39) prévue sur la poutre latérale extérieure (4.2, 5.2).

17. Machine de fenaison selon la revendication 3, caractérisée en ce que l'axe de pivotement (2, 3) coupe l'axe vertical (12) du râteau rotatif (7, 8) correspondant à son point d'intersection avec l'axe médian longitudinal de la poutre centrale (1).

18. Machine de fenaison selon l'une des revendications 1 à 17, caractérisée en ce que les axes verticaux (12) des râteaux rotatifs (7, 8) de la poutre centrale (1) sont disposés dans des plans transversaux par rapport à la direction de déplacement, ces plans coupant les axes de basculement (2, 3) des poutres latérales (4, 5) suivant un angle inférieur à 90°.

19. Machine de fenaison selon la revendication 18, caractérisée en ce que les axes de pivotement (2, 3) coupent le plan des axes verticaux associés sous un angle de 65°.

20. Machine de fenaison selon la revendication 18 ou 19, caractérisée en ce que les axes de pivotement (2, 3) sont sensiblement horizontaux.

21. Machine de fenaison selon l'une des revendications 18 à 20, caractérisée en ce que les axes verticaux (12) coupent les râteaux rotatifs (7, 8) et l'axe de pivotement (2, 3) correspondant.

Fig. 1

EP 0 289 864 B1

_Fig. 2_

Fig. 3

Fig. 4

Fig. 5

Fig. 6

EP 0 289 864 B1

Fig. 7

Fig. 8

Fig. 9

21

Fig. 10

Fig. 11

EP 0 289 864 B1

Fig. 12

Fig. 13

Fig. 14

Fig. 15